# EUROPÄISCHE PATENTSCHRIFT

(11) **EP 2 051 842 B1**
(45) Veröffentlichungstag und Bekanntmachung des Hinweises auf die Patenterteilung: **25.01.2012**
(21) Anmeldenummer: 07801744.9
(22) Anmeldetag: 17.08.2007
(51) Int. Cl.: B29C 45/53, B29C 45/58, B29C 45/18

(54) **SPRITZGIEßMASCHINE MIT TORPEDOKOLBENPLASTIFIZIERUNG**
INJECTION-MOULDING MACHINE WITH TORPEDO PLUNGER PLASTIFICATION
MACHINE À MOULER PAR INJECTION AVEC PLASTIFICATION PAR PISTON À TORPILLE

(30) Priorität: 18.08.2006 DE 102006038804
(43) Veröffentlichungstag der Anmeldung: 29.04.2009
(73) Patentinhaber: Zhafir Plastics Machinery GmbH, 92263 Ebermannsdorf (DE)
(72) Erfinder: FRITZLAR, Volker, 92224 Amberg (DE)
(74) Vertreter: Schneider, Andreas
(86) Internationale Anmeldenummer: PCT/EP2007/007304
(87) Internationale Veröffentlichungsnummer: WO 2008/019878

(56) Entgegenhaltungen:
- DE-A1- 2 126 637
- DE-A1- 2 357 583

## Beschreibung

Die Erfindung betrifft eine Plastifiziereinheit einer Spritzgießmaschine zum Aufschmelzen und Fördern des Kunststoffmaterials mit einem Zylinder und einem Torpedokolben an dessen vorderem Ende eine Rückstromsperre angeordnet ist, wobei die Kunststofförderung von zwei gegenläufigen Füllkolben gewährleistet wird, die seitlich links und rechts am hinteren Ende des Zylinders neben dem Torpedokolben unter einem geteilten Einfüllschacht arbeiten und die von jeweils einem Arbeitszylinder angetrieben werden, wobei eine Schieberplatte jeweils den Teil des Einfüllschachtes über dem stopfenden, sich in Düsenrichtung bewegenden Füllkolbens verschließt und ein Füllkanalventil den dazugehörigen Füllkanal öffnet, wobei die Füllkanäle sich in Form je einer Längsnute im Schaft des Torpedokolbens fortsetzen und in nachgeordnete Scher- und Mischteile des Torpedokolbens münden, wobei sich die Durchflußquerschnitte der Scher- und Mischteile in Düsenrichtung verengen, wobei der Torpedokolben mit einem zentralen oder mehreren dezentralen Einspritzzylindern verbunden ist, für den axialen Antrieb und zur Erzeugung von Stau- und Einspritzdruck.

Gattungsgemäße Spritzgießmaschinen sind aus dem Stand der Technik bekannt und arbeiten derartig, daß eine, mit einem Rotationsantrieb verbundene Förderschnecke das Kunststoffmaterial im Schneckenzylinder von der Einfüllöffnung bis in den Stauraum vor der Rückstromsperre transportiert und dabei im Schneckenzylinder gegen einen Staudruck zurückgedrückt wird und anschließend durch einen oder mehrere Einspritzzylinder wieder in Düsenrichtung geschoben wird. Dadurch wird der aufgeschmolzene Kunststoff durch eine Düse in den Hohlraum eines Werkzeuges gepreßt. Die Energie zum Aufschmelzen des Kunststoffmaterials setzt sich zusammen aus der Wärmeenergie des Heizbandsatzes auf dem Schneckenzylinder und der Reibungswärme des Förder- und Verdichtungsprozesses.

Die Rotation der Förderschnecke erzeugt metallische Reibung zwischen dem Schneckenzylinder und den Teilen der Rückstromsperre, die zwangsläufig Verschleiß verursacht und somit die Lebensdauer dieses Systems begrenzt. Der metallische Abrieb durch den Verschleiß wirkt sich negativ auf die optische Qualität des Kunststoffteils aus. Die Förderleistung einer Schnecke ist neben der Drehzahl stark abhängig von den Reibungs- und Passungsverhältnissen zwischen Schneckenzylinder und Schnecke. Diese Verhältnisse verschlechtern sich durch den Verschleiß und mindern die Förderleistung.

Weiterhin ist in der Literatur eine Höchstdruckplastifiziereinheit beschrieben (Plastverarbeiter 23, 1972 Heft 10, S. 671-687), in der ein Kolben in einem Zylinder von der Einfüllöffnung in Düsenrichtung den Kunststoff mit extrem hohen Druck durch eine enge Düse drückt. Die Energie zum Aufschmelzen soll neben der Wärme des Heizbandsatzes aus dem Widerstand des Düsendurchflusses gewonnen werden. Bei einer Variante dieser Bauform wird der Kolben mit einem frequentierenden Druck betrieben, die eine zusätzliche Aufheizung des Kunststoffmaterials bewirken soll.

Diese Anordnung erfordert für Zylinder und Kolben schwer zu realisierende Materialfestigkeiten. Der Kunststoffanteil, der in den Spalt zwischen Zylinder und Kolben gepreßt wird, scheidet als Leckage aus dem Prozeß aus. Ein exaktes Dosieren der Kunststoffmenge für den Einspritzvorgang ist beim Freigeben der Einfüllöffnung durch das Zurückfahren des Kolbens nicht möglich.

Auch in DE 21 26 637 ist eine Spritzgußmaschine mit einem verschiebbaren Homogenisierungskolben beschrieben. Dieser wird während der Plastifizierung durch die Schmelze gegen einen nachgeschalteten Hydraulikzylinder gedrückt.

Aufgabe der Erfindung ist es daher, eine Plastifiziereinheit derart weiterzuentwickeln, daß ein Verschleiß wie bei einer rotierenden Schnecke vermieden wird und ein kontinuierlicher Prozeß vergleichsweise einer Schnecke erzielt wird und eine besser regelbare Förderung und Homogenisierung des Kunststoffmaterials ohne erhöhte Leckage erreicht wird. Diese Aufgabe wird durch die Merkmale des Anspruchs 1 gelöst.

In einem Zylinder ist ein konzentrischer Torpedokolben, bestehend aus einem Schaft und einer Kombination von Scherund Mischteilen und einer davor befestigten Rückstromsperre angeordnet und im Zylinderende bewirken beidseitig neben dem Torpedokolben zwei gegenläufige Füllkolben die Kunststofförderung, indem der Kunststoff durch je einen dazugehörigen Füllkanal, ein verschließbares Füllkanalventil und eine Füllnute im Schaft des Torpedokolbens bis über den Spalt zwischen Zylinderbohrung und den Scherteilen und durch die Mischteile in den Stauraum gepreßt wird und dabei homogenisiert und aufgeschmolzen wird.

Durch den Wegfall eines Rotationsantriebs wird erreicht, dass der Einspritzzylinder einfacher und die gesamte Spritzeinheit kürzer baut, weil außer der Einbaulänge des Rotationsantriebs selbst auch alle Bauteile für die Übertragung eines Drehmomentes entfallen.

Das Zylinderende hat zwei Einfüllöffnungen, die in die Arbeitsräume der Füllkolben münden. Startet der hintere Füllkolben den Stopfvorgang, verschließt eine Schieberplatte die Einfüllöffnung über diesem Füllkolben und gibt gleichzeitig die vordere Einfüllöffnung frei. Damit ist ausgeschlossen, daß das Kunststoffgranulat in den Materialtrichter zurückgedrückt wird, sondern voll in den Füllvorgang einbezogen wird. Zusätzlich öffnet das hintere Füllkanalventil und das vordere wird geschlossen. Hiermit wird verhindert, daß der Kunststoff vom hinteren in den vorderen Füllkanal gepumpt wird.

Die Länge der Füllnute im Schaft entspricht der dem maximalen Arbeitshub des Torpedokolbens und der Abstand der Einmündung der Füllkanäle in die Innenbohrung bis zum hinteren Ende des Zylinders entspricht ebenfalls der maximalen Hublänge. Hiermit wird eine kürzere Baulänge des Zylinders gegenüber einer Schneckenplastifizierung erreicht, da die Einfüllöffnungen sich im Zylinderende befinden.

In den Zeichnungen ist ein Ausführungsbeispiel in verschiedenen Ansichten dargestellt. Es zeigt
- Fig. 1: eine Spritzeinheit mit Torpedokolberplastifizierung einschließlich Gehäuse und Einspritzzylinder im Horizontalschnitt und
- Fig. 2: eine Plastifiziereinheit mit Torpedokolben als Draufsicht mit den Füllkolben und
- Fig.3: eine Plastifiziereinheit mit Torpedokolben im Vertikalschnitt mit Massetrichter und
- Fig. 4: eine Plastifiziereinheit mit Torpedokolben mit Kniehebelantrieben für die Füllkolben.

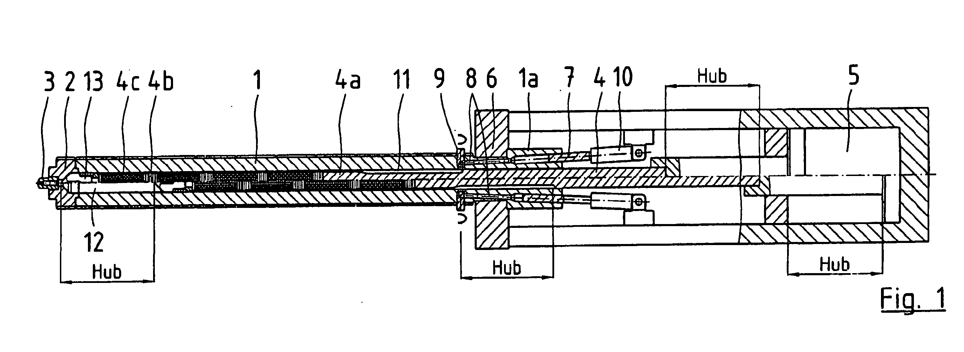

Die in Fig. 1 dargestellte Spritzeinheit zeigt einen Zylinder 1 mit einem Zylinderkopf 2 und einer Düse 3 in dem ein Torpedokolben 4 angeordnet ist der mit einem Einspritzzylinder 5 verbunden ist. Der Zylinder 1 ist in einem Gehäuse 6 gelagert, wobei die Ringfläche des zylindrisch verdickten Zylinderendes 1a die Einspritzkraft in das Gehäuse 6 einleitet. In diesem Zylinderende 1a sind beidseitig neben der Bohrung für den Torpedokolben zwei im Durchmesser kleinere Bohrungen angeordnet, in denen die Füllkolben 7 geführt werden. Diese Bohrungen laufen weiter als Füllkanäle 8 bis in die Füllkanalventile 9. Wesentlich dabei ist, daß die Füllkanalventile 9 wechselseitig den Füllkanal 8 des jeweils sich, durch einen Arbeitszylinder 10 in Düsenrichtung angetriebenen Füllkolben 7 öffnet und die Verbindung zur Füllnute 11 im Schaft 4a des Torpedokolbens 4 freigibt und den gegenüberliegenden Füllkanal 8 verschließt. Das ist Voraussetzung dafür, daß der stopfende Füllkolben 7 den Kunststoff nicht in der Raum vor den zurückfahrenden Füllkolben 7 drückt und ein Staudruck im Stauraum 12 vor der Rückstromsperre 13 aufgebaut werden kann. Die Längen der Füllnuten 11 entsprechen dem Maximalhub des Torpedokolbens 4 und gehen über in einen Ringspalt zwischen der Mittelbohrung des Zylinders 1 und dem Schaft 4a. In Düsenrichtung schließt an den Schaft 4a eine Kombination von Scherteilen 4b und Mischteilen 4c an mit sich verengenden Durchflußquerschnitte. Stirnseitig ist an dem Torpedokolben 4 eine Rückstromsperre 13 befestigt.

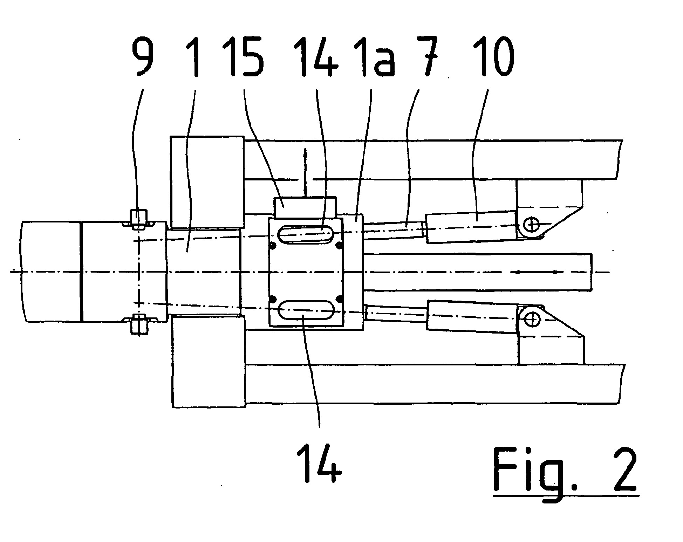

Die in Fig. 2 dargestellte Draufsicht einer Spritzeinheit zeigt einen Zylinder 1 mit zwei Einfüllöffnungen 14 im Zylinderende 1a über den Bohrungen der Füllkolben 7. Wesentlich hierbei ist eine zeitliche Abfolgekopplung der Ansteuerung von Füllkolben 7, Füllkanalventil 9 und Schieberplatte 15 derart, dass mit dem Beginn der Bewegung des hinteren Füllkolbens 7 in Düsenrichtung die hintere Einfüllöffnung 14 durch die Schieberplatte 15 geschlossen wird und das hintere Füllkanalventil 9 geöffnet wird und das vordere Füllkanalventil 9 geschlossen wird, die Schieberplatte 15 hat dann zwangsläufig die vordere Einfüllöffnung 14 freigegeben und der vordere Füllkolben 7 startet in die Ausgangsposition. Das hat den Vorteil, daß das gesamte, mit Kunststoffgranulat ausgefüllte Volumen vor dem Füllkolben in den Förderprozeß einbezogen wird und Dosierprobleme nicht auftreten.

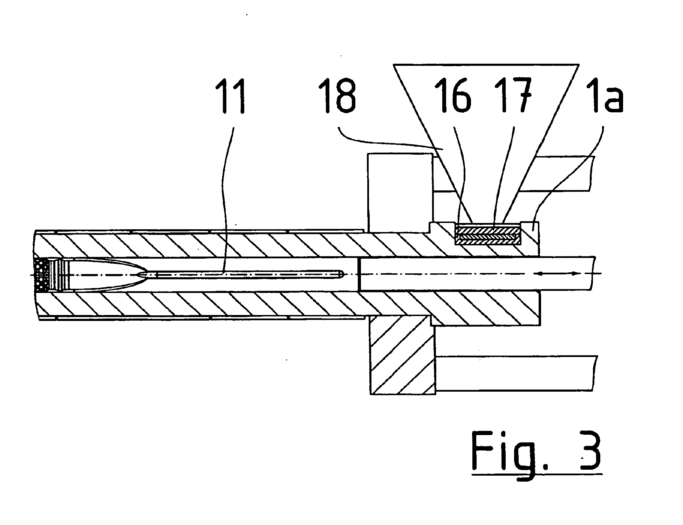

Die Führung der Schieberplatte 15 zwischen einer Kassette 16 und einem Deckel 17 ist in Fig. 3 dargestellt. Auf dem Deckel 17 ist ein Materialtrichter 18 befestigt. Die Kassette 16 sitzt vorzugsweise in einer Quernute des Zylinderendes 1a.

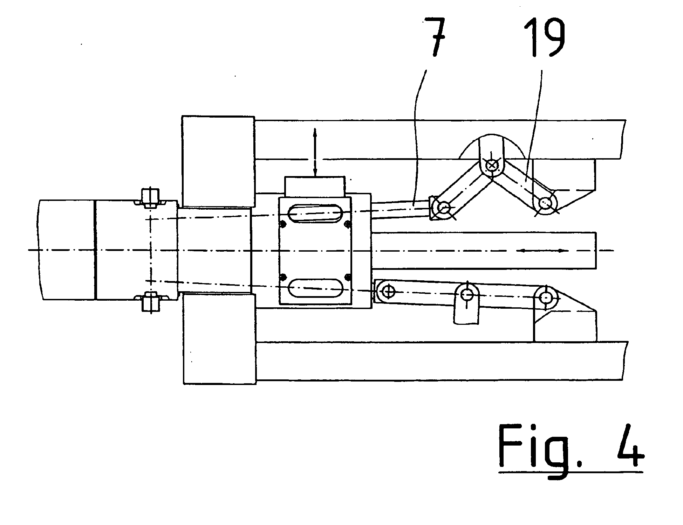

Durch Kniehebel 19 angetriebene Füllkolben 7 zeigt Fig. 4. Das hat den Vorteil, daß die Druckkraft steigt, je weiter ein Füllkolben 7 in Düsenrichtung bewegt wird, was den erforderlichen Reaktionskräften entspricht.

### Bezugszeichenliste

- 1: Zylinder
- 1a: Zylinderende
- 2: Zylinderkopf
- 4: Torpedokolben
- 4a: Schaft
- 4b: Scherteil
- 4c: Mischteil
- 5: Einspritzzylinder
- 6: Gehäuse
- 7: Füllkolben
- 8: Füllkanal
- 9: Füllkanalventil
- 10: Arbeitszylinder
- 11: Füllnute
- 12: Stauraum
- 13: Rückstromsperre
- 14: Einfüllöffnung
- 15: Schieberplatte
- 16: Kassette
- 17: Deckel
- 18: Materialtrichter
- 19: Kniehebel

## Patentansprüche

1. Plastifiziereinheit für eine Spritzeinheit einer Spritzgießmaschine mit einem beheizten Zylinder (1), an dessen vorderem Ende ein Zylinderkopf (2) mit einer Düse (3) befestigt ist, gelagert in einem Gehäuse (6), das mit einem Einspritzzylinder (5) verbunden ist, wobei in der Mittelbohrung des Zylinders (1) ein axial verschiebbarer Torpedokolben (4) angeordnet ist, der, bestehend aus einem Schaft (4a) und einer Kombination aus Scherteilen (4b) und Mischteilen (4c) vom Kunststoff umströmt wird, der dabei aufgeschmolzen und homogenisiert wird, **dadurch gekennzeichnet, daß** zwei gegenläufige Füllkolben (7) in Bohrungen seitlich neben der Mittelbohrung angeordnet sind, die die Kunststofförderung durch die Füllkanäle (8), durch die Füllkanalventile (9), durch die Füllnute (11) im Schaft (4a) des Torpedokolbens (4) bewirken, und mit einer Rückstromsperre (13), die das Zurückfließen des Kunststoffes beim Einspritzen verhindert.

2. Plastifiziereinhet nach Anspruch 1, **dadurch gekennzeichnet, daß** im Zylinderende (1a) zwei Einfüllöffnungen (14) in die Bohrungen für die Füllkolben (7) münden und eine Schieberplatte (15) jeweils die Verbindung einer Einfüllöffnung (14) zum Materialtrichter (18) sperrt und die gegenüberliegende Verbindung freigibt.

3. Plastifiziereinheit nach Anspruch 2 **dadurch gekennzeichnet, daß** in seitlichen Querbohrungen im Zylinder (1) Füllkanalventile (9) angeordnet sind, die die Verbindung von dem Füllkanal (8) in die Füllnute (11) des jeweils stopfenden Füllkolbens (7) öffnet und die Verbindung des zurückfahrenden Füllkolbens (7) verschließt.

## Claims

1. Plastification unit for an injection unit of an injection-moulding machine, comprising a heated cylinder (1), secured to the front end of which is a cylinder head (2) with a nozzle (3), mounted in a housing (6), which is connected to an injection cylinder (5), wherein an axially displaceable torpedo plunger (4) is arranged in the central bore of the cylinder (1) and said plunger, comprising a shaft (4a) and a combination of shearing parts (4b) and mixing parts (4c), is surrounded by the flowing plastic, which is thereby melted and homogenized, **characterized in that** two opposing filling plungers (7) are arranged in bores laterally alongside the central bore and bring about the conveying of the plastic through the filling channels (8), through the filling channel valves (9) and through the filling groove (11) in the shaft (4a) of the torpedo plunger (4), and with a nonreturn valve (13), which prevents the plastic from flowing back during injection.

2. Plastification unit according to Claim 1, **characterized in that**, in the end of the cylinder (1a), two feed openings (14) open out into the bores for the filling plungers (7) and a slide plate (15) respectively blocks the connection of one feed opening (14) to the material hopper (18) and releases the opposite connection.

3. Plastification unit according to Claim 2, **characterized in that** filling channel valves (9) which open the connection from the filling channel (8) into the filling groove (11) of the respectively stuffing filling plunger (7) and close the connection of the returning filling plunger (7) are arranged in lateral transverse bores in the cylinder (1).

## Revendications

1. Unité de plastification pour une unité d'injection d'une machine de moulage par injection, comprenant un cylindre chauffé (1), à l'extrémité avant duquel est fixée une tête de cylindre (2) avec une buse (3), monté dans un boîtier (6), qui est connecté à un cylindre d'injection (5), un piston torpille (4) déplaçable axialement étant disposé dans l'alésage central du cylindre (1), lequel est constitué d'une tige (4a) et d'une combinaison de parties de cisaillement (4b) et de parties de mélange (4c) et est entouré d'un flux de plastique qui est en l'occurrence fondu et homogénéisé, **caractérisée en ce que** deux pistons de remplissage (7) entraînés en sens opposés sont disposés dans des alésages latéralement à côté de l'alésage central, lesquels provoquent le refoulement du plastique à travers les canaux de remplissage (8), à travers les soupapes des canaux de remplissage (9), à travers les rainures de remplissage (11) dans la tige (4a) du piston torpille (4), et comprenant une barrière anti-reflux (13) qui empêche le reflux du plastique lors de l'injection.

2. Unité de plastification selon la revendication 1, **caractérisée en ce que** deux ouvertures de remplissage (14) dans l'extrémité du cylindre (1a) débouchent dans les alésages pour les pistons de remplissage (7), et une plaque coulissante (15) bloque à chaque fois la connexion d'une ouverture de remplissage (14) à la trémie de matériau (18) et libère la connexion opposée.

3. Unité de plastification selon la revendication 2, **caractérisée en ce que** dans des alésages transversaux dans le cylindre (1) sont disposées des soupapes de canaux de remplissage (9), qui ouvrent la connexion du canal de remplissage (8) dans les rainures de remplissage (11) du piston de remplissage (7) respectif dans sa course de pression, et qui ferme la connexion du piston de remplissage (7) dans sa course de retour.
